# EUROPEAN PATENT SPECIFICATION

(11) **EP 0 281 173 B1**
(45) Date of publication and mention of the grant of the patent: **21.04.1993**
(21) Application number: 88200175.3
(22) Date of filing: 02.02.1988
(51) Int. Cl.: B60G 17/02, B60G 11/14, F16F 3/04, F16F 1/12

(54) **Vehicle suspension with height adjustment means**
Fahrzeugaufhängung mit Höhenverstellungsmöglichkeit
Suspension de véhicule avec réglage de hauteur

(30) Priority: 02.02.1987 NL 8700248
(43) Date of publication of application: 07.09.1988
(73) Proprietor: Schmidt, Gerrit, NL-2941 EL Lekkerkerk (NL)
(72) Inventor: Schmidt, Gerrit, NL-2941 EL Lekkerkerk (NL)

(56) References cited:
- EP-A- 0 115 774
- DE-A- 3 502 579
- DE-B- 1 125 290
- FR-A- 1 241 007
- FR-A- 2 252 509
- FR-A- 2 297 741
- FR-E- 80 847
- GB-A- 721 490
- US-A- 1 486 295
- US-A- 2 571 449
- US-A- 2 927 801
- US-A- 3 936 039
- US-A- 4 118 020
- PATENT ABSTRACTS OF JAPAN, vol. 10, no. 301 (M-525)(2357), October 14, 1986

## Description

The invention relates to a vehicle suspension with heigth adjustment means comprising two concentrically arranged coil springs; a cup shaped means located within the inner spring coil; an outwardly projecting flange fixed to the outer surface of said cup shaped means and co-operating with one end of said inner spring; a cylindrical housing secured at one end to a spring seat of the outer spring, said housing being provided at the end fixed to the spring seat with a duct for the supply of pressurised fluid and at its other end with an annular member; and a piston member comprising a piston rod being movable within said cylindrical housing and extending through said annular member whereby the end of said piston rod remote from said piston member co-operates with said cup-shaped means.

From FR-E-80847 (figure 1), corresponding to the preamble of claim 1 a vehicle suspension is known with heigth adjustment means, having a hydraulic actuator, comprising a cylindrical housing, a piston rod with a ball-shaped bottom end, and a pivotable cup-shaped means providing a spring seat.

In the embodiment with two concentrically arranged coil springs the cup-shaped means and the inner spring are located below the cylindrical housing in every position of the piston rod, resulting in a limited maximum travel of the suspension arm.

Dirt and other foreign material can damage the unprotected piston rod and ball joint.

Further with a cup-shaped means only pivotally connected to the bottom end of the piston rod the horizontal component of the spring force is fully acting on the bottom end of the piston rod.

From US-A-2 927 801 is known a vehicle suspension with height adjustment means, having a hydraulic actuator with an annular piston member with its outer flange serving as a spring seat. The upper part of said annular piston member has a bore which is provided with a seal while the lower part is closed with a sealed cup-shaped means which serves only as a cover to provide a leak-proof compartment for the pressurised fluid.

The inner cylinder is formed with an outwardly extending flange engageable by a part of the annular piston member to limit the longitudinal movement between the cylinder and the annular member.

Assembling this hydraulic unit is complicated, and the seal of the annular piston member can be damaged easily by dirt and other foreign material, deposited on the exposed outer cylindrical surface.

According the present invention said cup-shaped means is provided with an inner cylindrical guide surface extending co-axially around the piston rod and arranged such that the outer circumferential surface of at least part of the housing serves as guide for the longitudinal displacement of said cup-shaped means.

In using the structure according the invention the outer diameter of the tubular cup-shaped means need be only slightly larger than the diameter of the cylindrical housing, resulting in a compact hydraulic actuator which can be located inside a spring allowing relatively small spring diameters, a maximum length of the inner spring and therefore utilizes the maximum stroke of the suspension whitin a given working space.

Another advantage of the invention is that the tubular cup-shaped means functions as a perfect dust cover for the piston rod, without requiring extra components and therefore extra expenses.

A further advantage of the invention is that the horizontal component of the inner spring force acts almost fully on the guiding cylindrical housing and not on the bottom end of the piston rod.

Further there is no need to machine the outer surface of the cylindrical housing for there is no pressurised fluid outside the housing and inside the cup-shaped means.

The invention will be explained further with reference to the drawings.

Figure 1 is a cross-sectional view of an embodiment.

Figure 2 is a cross-sectional view of a further embodiment.

Figure 3 shows a third embodiment of the structure according the invention.

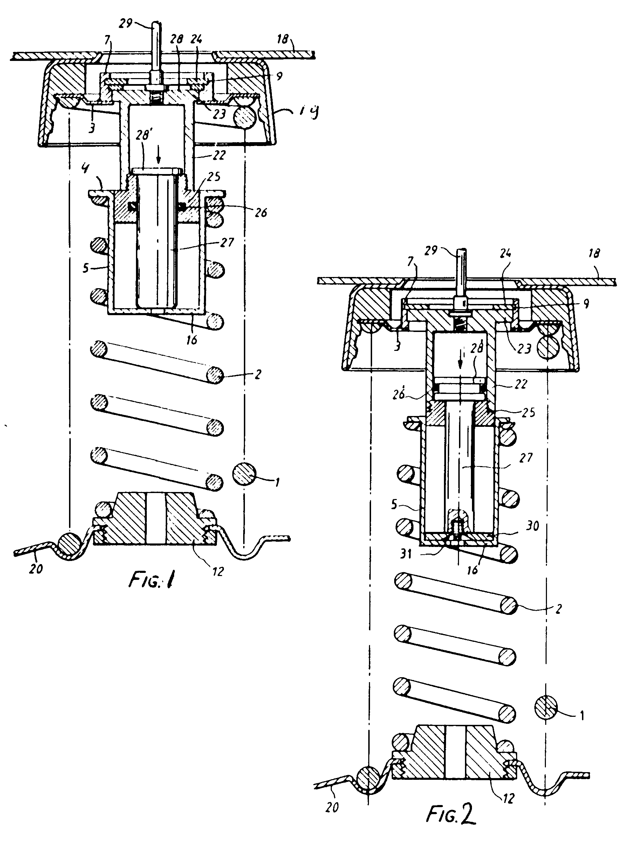

The vehicle suspension illustrated in figure 1 comprises two concentrically arranged coil springs 1 and 2. Preferably the inner spring 2 has a spring rate equal to or higher than the outer spring 1, whilst in released condition the length of the outer spring 1 is preferably greater than the length of the inner spring 2.

In the embodiment illustrated in figure 1 the upper end of the coil spring 1 bears against an upper spring seat 3.

Within the inner spring 2 has been arranged a cylindrical housing 22, which is provided at its upper end with an outwardly projecting collar 23 which is supported by the spring seat 3. The housing 22 is thereby secured against displacement in its longitudinal direction by means of a circlip 24, which is accomodated in a groove 9, provided in a tubular member 7 fixed to the spring seat 3.

An annular means 25 is screwed in the bottom end of the housing 22, whereby the bottom end of said annular means 25 has a larger exterior diameter than the housing 22. In the inner circumference of the annular means 25 there is provided a circular groove, in which an O-ring seal 26 is accommodated. Said O-ring seal 26 co-operates with a piston rod 27 movably accommodated in the housing 22 and the annular means 25, said plunger at its upper end being provided with a projecting flange or piston member 28', which in the lowermost position of the piston rod 27 as illustrated in figure 1 bears against the upper end of the annular means 25 in order to limit the downward movement of the piston rod 27.

As will furthermore be apparent from figure 1 the bottom end of the piston rod 27 acts on the bottom 16 of a cup-shaped means 5. The upper end of the inner spring 2 abuts against a flange 4, provided at the upper end of the cup-shaped means 5.

The upper end of the housing 22 is closed with a lid 28, to which a duct 29 for the supply of pressurised fluid is connected.

As further diagrammatically illustrated in figure 1, the spring assembly is mounted between a cup 19 fixed to a chassis 18 of a car and suitable for accommodating the spring seat 3, and a wheel suspension arm 20, which is provided with a suitable hole for accommodating a lower spring seat 12. The lower end of spring 2 is supported by the spring seat 12 and the lower end of spring 1 is supported by the wheel suspension arm 20.

During normal operation chassis 18 will thereby be supported via the wheel suspension arm 20 usually pivotally coupled to the cassis by means of a pivot pin (not shown).

During normal operation the upper end of the piston rod 27 will abut against the lid 28 and the cup-shaped means 5 will take up an upper position wherein the cup-shaped means 5 surrounds the housing 22. This corresponds with the lowermost position of the chassis of the vehicle.

When it is desired to move the chassis of the vehicle upwards relatively to the ground surface a pressurized fluid may be supplied to the interior of the housing 22, so that the piston rod 27 will be moved downwards by means of said pressurized fluid, to the position illustrated in figure 1. As a result the inner coil spring 2 will be compressed.

Assuming that the spring rates of the two springs will be equal, then in case of a compression of the inner coil spring over a distance of e.g. 50 mm, the distance between the upper seat and the lower seat will be increased with 25 mm.

As only the annular means 25 is used for guiding both the plunger 27 and the cup-shaped means 5 only said annular means needs to be machined with the necessary accuracy, while e.g. the housing 22 can be manufactured from a length of tube.

Furthermore the hydraulically operated height adjustment means is substantially entirely located in the interior of the spring assembly, so that the height adjustment means does not form an impeding projection, but can be fitted into an existing construction without any problems.

Figure 2 illustrates an embodiment which at least substantially corresponds with the embodiment according to figure 1 and consequently parts of the construction illustrated in figure 2 which corresponds with parts of the construction illustrated in figure 1 are provided with the same reference numbers as used in figure 1.

As will be apparent from figure 2, however, the outer diameter of the annular means 25 has been made equal to the outer diameter of the cylindrical housing 22 here, so that when the cup-shaped means 5 moves upward and downward it is guided along the outer circumference of the two parts 22 and 25 which bound the room to which pressurised fluid can be supplied via the duct 29.

In the embodiment illustrated in figure 2 the piston member 28' is provided with an O-ring seal 26'. As a result of this it will be possible to leave out the O-ring seal 26 provided in the bore of the annular means 25 according to the embodiment according of figure 1. This will simplify the manufacture of the construction.

The bottom end of the piston rod 27 is supported by the bottom, having a hole, of the cup-shaped means 5, via a washer 30 fixed to the bottom end of the plunger by means of a screw 31.

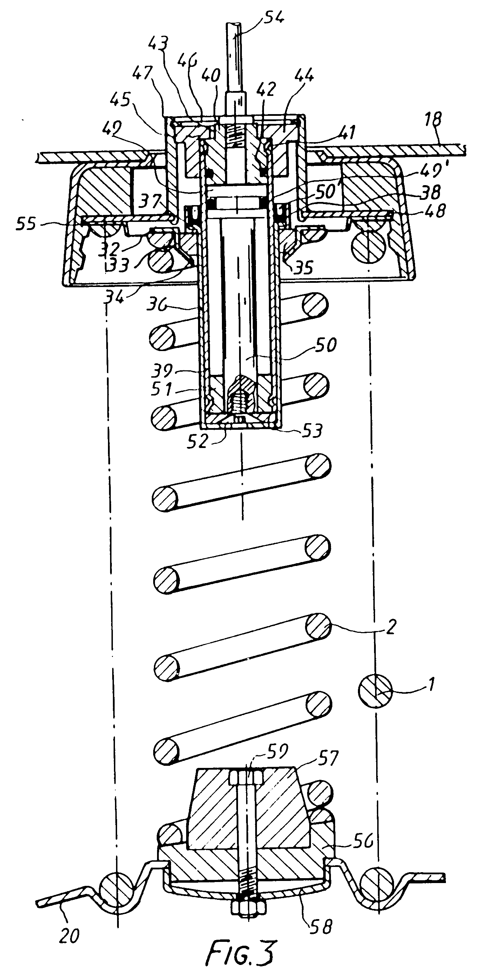

In the embodiment illustrated in figure 3 the upper end of the inner coil spring 2 is supported by a projecting collar 32 of a spring seat comprising a cylindrical part 33 joining the collar 32 and extending downwards from the collar 32, and a part 34 tapering downwards and joining the bottom end of said cylindrical part 33. A washer 35, preferably made of a plastic material, rests in said spring seat, said washer being formed such that its bottom surface rests on the conical part 34 of the spring seat, whilst its upper surface extends perpendicularly to the longitudinal axis of the two springs 1 and 2.

The washer 35 has a sliding fit around the upper end of a cup-shaped means 36, which at its upper end is provided with a projecting flange 37. Retained between the flange 37 of the cup-shaped means 36 and the washer 35 is the horizontal leg of a scraper housing 38 having an L-shaped section.

The cup-shaped means 36 surrounds a cylindrical housing 39, which at its upper end has a crimped connection to an annular member 40, for which purpose a circular groove 41 is provided in the annular member, in which groove a bend wall part of the housing 39 is accommodated. In the annular member 40 there is furtermore provided a second circular groove, in which an O-ring 42 retained between the inner wall of the housing 39 and the annular member 40 is accommodated.

The upper end of the housing 39 accommodating the annular member 40 is mounted in a stepped bore 43, which is provided in an annular member 44. An upward movement of the housing 39, seen in figure 3, is thereby prevented because the upper end of the housing abuts against a shoulder 45 formed at the transition between the two parts, having different diameters, of the stepped bore 43 in annular member 44.

The upward movement of the annular member 44 from the position illustrated in figure 3 is limited by a circlip 46, which is provided in a groove formed in a sleeve 47 surrounding the upper end of the housing 39 with the annular member 44, said sleeve 47 being fixed to a plate or spring seat 48 located in the cup 19.

In the housing 39 there is accommodated a piston-member 49, such that said piston-shaped means can move in the longitudinal direction of the housing 39. In the circumference of the piston-member 49 there is provided a circular groove, in which a sealing means 49' is accommodated. The piston-member 49 is attached to the upper end of a piston rod 50. The piston rod 50 is passed through an annular member 51 provided in the bottom end of the housing 39, said annular member 51 being fixed to the housing 39 in the same manner as the annular member 40. A washer 53 is fixed to the bottom end of the rod 50 by means of a screw 52. The washer 53 rests on the bottom of the cup-shaped means 36 provided with a hole.

As furthermore appears from the figure 3 a through bore is provided in the annular member 40, to which bore there is connected a duct 54 via which duct pressurised fluid can be supplied to the room located in the housing 39 above the piston-member 49.

It will be apparent that when pressurized fluid is supplied to the housing 39 via duct 54 the piston-member 49 with the piston rod 50 attached thereto will be pressed downwards while taking along the cup-shaped means 36 guided along the outer circumference of the housing 39. Said downward moving of the cup-shaped means 36 will in its turn result in the compression of the coil spring 2 in a similar manner as described above, with the effect also described above.

As is further illustrated in figure 3 a scraper ring 50' is provided between the upwardly extending leg of the scraper housing 38 and the outer circumference of the housing 39 for scraping any dirt or ice or the like off the outer circumference of the housing 39 during the upward and downward movement of the cup-shaped means 36.

Between the spring seat 48 and the upper end of the outer spring 1 there is provided a spring seat 55, which has a part extending downwards into the interior of the spring 1 for keeping the spring 1 centered.

At its bottom end the inner spring 2 is supported by a spring seat 56, on which is constructed such that the end face of said spring seat 56 includes an acute angle with the axis of the spring 2. In practice it has become apparent that this prevents the lateral bowing of the spring 2 under a load.

In the spring seat 56 there is provided a recess in which there is provided the bottom end of a guide block 57 projecting into the spring and tapering upwards.

The seat 56 rests on the wheel suspension arm 20 in the manner illustrated and is fixed, together with the block 57, to the wheel suspension arm 20 by means of a cap 58 bearing against the bottom side of the wheel suspension arm 20 and a bolt 59.

## Claims

1. A vehicle suspension with height adjustment means
comprising two concentrically arranged coil springs (1, 2); a cup-shaped means (5, 36) located within the inner spring coil; an outwardly projecting flange (4, 37) fixed to the outer surface of said cup-shaped means (5, 36) and co-operating with one end of said inner spring (2); a cylindrical housing (22, 39) secured at one end to a spring seat (3, 48) of the outer spring (1), said housing (22, 39) provided at the end fixed to the spring seat (3, 48) with a duct (29, 54) for the supply of pressurised fluid and at its other end with an annular member (25, 51); and a piston member (28', 49) with a piston rod (27, 50) being movable within said cylindrical housing (22, 39) and extending through said annular member (25, 51) whereby the end of said piston rod (27, 50) remote from said piston member (28', 49) co-operates with said cup-shaped means (5, 36), **characterised in that,** said cup-shaped means (5, 36) is provided with an inner cylindrical guide surface extending co-axially around the piston rod (27, 50) and arranged such that the outer circumferential surface of at least part of the housing (22, 39) serves as guide for the longitudinal displacement of said cup-shaped means (5, 36).

2. A vehicle suspension according claim 1, characterised in that at its end remote from the cup-shaped means (5, 36) the cylindrical housing (22, 39) is supported by a detachable member (24, 46) and connected to a part (18) of the vehicle body.

3. A vehicle suspension according claim 1 or 2, wherein the external diameter of said annular member (25) is greater than the external diameter of the remainder of the housing (22) and the guide surface of the cup-shaped means (5) co-operates with the outer circumferential surface of the annular member (25) of the housing (22).

4. A vehicle suspension according to any preceding claim,
wherein the upper end of the cylindrical housing (22, 39) is accommodated in a sleeve (7, 47) connected to a spring seat (3, 48) of the outer spring (1).

5. A vehicle suspension according to claim 4, wherein the sleeve (7, 47) extends from the spring seat (3, 48) in a direction remote from the springs (1, 2).

6. A vehicle suspension according to any one of the preceding claims,
characterised in that at its end near the flange (4, 37) the cup-shaped means (5, 36) is provided with a scraper means (50') co-operating with the outer circumference of the cylindrical housing (22, 39).

7. Vehicle suspension according to any one of the preceding claims,
characterised in that the cup-shaped member (36) is surrounded by a washer (35) bearing against the flange (37), said washer (35) supporting the spring seat (34) of the inner spring (2).

8. Vehicle suspension according to claim 7, characterised in that the co-operating surfaces of washer (35) and spring seat (34) are conical.

## Patentansprüche

1. Fahrzeugaufhängung mit Höhenverstellungsmöglichkeit
bestehend aus zwei konzentrischen Schraubenfedern (1, 2); einem becherförmigen Teil (5, 36) untergebracht innerhalb der Innenfeder; einem nach außen geformten Flansch (4, 37), verbunden mit der Außenwand des becherförmigen Teils (5, 36) und wirkend auf ein Ende der Innenfeder (2); einem zylindrischen Gehäuse (22, 39), an einer Seite befestigt an einem Federteller (3, 48) der Außenfeder (1), wobei das Gehäuse (22, 39), das mit dem Federteller (3, 48) verbunden ist, versehen ist mit einem Anschlußstutzen (29, 54) für das Druckmedium und auf der anderen Seite bestückt ist mit einem ringförmigen Teil (25, 51); und einem Kolben-Element (28', 49) mit einer Kolbenstange (27,50), beweglich in dem zylindrischen Gehäuse (22, 39) und geführt durch das ringförmige Teil (25, 51), wobei das dem Kolben-Element (28', 49) gegenüberliegende Ende der Kolbenstange (27, 50) auf das becherförmigen Teil (5, 36) wirkt, **dadurch gekennzeichnet,** daß die innere zylindrische Oberfläche des becherförmigen Teils (5, 36) eine Führungswand bildet, die die Kolbenstange (27, 50) ko-axial umschließt und wobei die äußere zylindrische Wand oder mindestens ein Teil des Gehäuses (22, 39) als Führung für die Längsbewegung des becherförmigen Teils (5, 36) dient.

2. Fahrzeugaufhängung nach Anspruch 1, dadurch gekennzeichnet, daß die dem becherförmigen Teil (5, 36) gegenüberliegende Seite des zylindrischen Gehäuses (22, 39) mit einem Teil (18) der Fahrzeug-Karosserie, mittels eines abnehmbaren Teils (24, 46) verbunden ist.

3. Fahrzeugaufhängung nach den Ansprüchen 1 oder 2, wobei der Außendurchmesser des ringförmigen Teils (25) größer ist als der Außendurchmesser des weiteren Teils des Gehäuses (22) und wobei die Führungswand des becherförmigen Teils (5) über die äußere zylindrische Wand des ringförmigen Teil (25) des Gehäuses (22) läuft.

4. Fahrzeugaufhängung nach den vorhergehenden Ansprüchen,
wobei das obenliegende Teil des zylindrischen Gehäuses (22, 39) in einer Hülse (7, 47) gelagert ist, die an einem Federteller (3, 48) der Außenfeder (1) befestigt ist.

5. Fahrzeugaufhängung nach Anspruch 4, wobei sich die Hülse (7, 47) von dem Federteller (3, 48) in entgegengesetzte Richtung der Federn (1, 2) erstreckt.

6. Fahrzeugaufhängung nach den vorhergehenden Ansprüchen,
dadurch gekennzeichnet, daß an der Seite, in der Nähe des Flanschs (4, 37), das becherförmiger Teil (5, 36) ausgerüstet ist mit einem Abstreifer (50'), der die Außenwand des zylindrischen Gehäuses (22,39) abstreift.

7. Fahrzeugaufhängung nach den vorhergehenden Ansprüchen,
dadurch gekennzeichnet, daß der becherförmige Teil (36) von einem Ring (35), der an dem Flansch (37) anliegt, umgeben ist, und der den Federteller (34) der Innenfeder (2) trägt.

8. Fahrzeugaufhängung nach Anspruch 7, dadurch gekennzeichnet, daß die aufeinander liegenden Flächen von dem Ring (35) und dem Federteller (34) konisch geformt sind.

## Revendications

1. Suspension de véhicule avec réglage de hauteur
comprenant deux ressorts hélicoïdaux concentriques (1, 2); un organe en forme de coupe (5, 36) localisé dans le ressort intérieur; une bride (4, 37) de projection extérieure fixée à la surface extérieure de l'organe dit en forme de coupe (5, 36) et coopérant avec l'une des extrémités du dit ressort intérieur (2); un boîtier cylindrique (22, 39) consolidé à l'une des extrémités au siège (3, 48) du ressort extérieur (1), le dit boîtier (22, 39) pourvu à l'extrémité fixée au siège de ressort (3, 48) d'un conduit (29, 54) pour l'alimentation du fluide pressurisé et à son autre extrémité avec une pièce annulaire (25, 51); et une partie à piston (28', 49), avec une tige de piston (27, 50) pouvant coulisser dans le dit boîtier cylindrique (22, 39) et s'étendant à travers la dite pièce annulaire (25, 51) où l'extrémité de la dite tige de piston (27, 50), à partir de la dite partie à piston (28', 49), coopère avec l'organe dit en forme de coupe (5, 36), **caractérisé par le fait que** l'organe dit en forme de coupe (5, 36) est pourvu d'une surface de guidage cylindrique intérieure coaxialement autour de la tige de piston (27, 50) et faisant de sorte que la surface circonférentielle extérieure ou tout au moins une partie du boîtier (22, 39) sert de guide au déplacement longitudinal de l'organe dit en forme de coupe (5, 36).

2. Suspension de véhicule selon la revendication 1, caractérisée par le fait qu'à son extrémité, à partir de l'organe en forme de coupe (5, 36), le boîtier cylindrique (22, 39) est supporté par une pièce détachable (24, 46) et connecté à une partie (18) de la carrosserie de la voiture.

3. Suspension de véhicule selon la revendication 1 ou 2, où le diamètre extérieur de la dite pièce annulaire (25) est plus grand que le diamètre extérieur du restant du boîtier (22) et la surface de guidage de l'organe en forme de coupe (5) coopère avec la surface circonférentielle extérieure de la pièce annulaire (25) du boîtier (22).

4. Suspension de véhicule selon l'une des revendications précédentes,
où l'extrémité supérieure du boîtier cylindrique (22, 39) est adaptée dans un manchon (7, 47) connectée au siège (3, 48) du ressort extérieur (1).

5. Suspension de véhicule selon la revendication 4, où le manchon (7, 47) s'étend du siège (3, 48) dans une commande directionnelle à partir des ressorts (1, 2).

6. Suspension de véhicule selon l'une des revendications précédentes
caractérisée par le fait qu'à son extrémité près de la bride (4, 37) l'organe en forme de coupe (5, 36) est muni d'une raclette (50') coopérant avec la circonférence extérieure du boîtier cylindrique (22, 39).

7. Suspension de véhicule selon l'une des revendications précédentes
caractérisée par le fait que l'organe en forme de coupe (36) est entouré d'un anneau (35) appuyant contre la bride (37), le dit anneau supportant la collerette (34) du ressort intérieur (2).

8. Suspension de véhicule selon la revendication 7, caractérisée par le fait que les surfaces coopérantes d'anneau (35) et du siège de ressort (34) sont de forme conique.
